# EUROPÄISCHE PATENTSCHRIFT

(11) **EP 1 124 469 B1**
(45) Veröffentlichungstag und Bekanntmachung des Hinweises auf die Patenterteilung: **16.04.2003**
(21) Anmeldenummer: 99970893.6
(22) Anmeldetag: 14.10.1999
(51) Int. Cl.: A47B 47/00, F16B 7/00, F16B 7/04, F16B 5/00

(54) **KUPPLUNG, INSBESONDERE FÜR EIN BAUKASTEN-STÄNDERSYSTEM**
COUPLING, ESPECIALLY FOR A MODULAR ASSEMBLY STAND SYSTEM
ACCOUPLEMENT DESTINE NOTAMMENT A UN SYSTEME MODULAIRE DE MONTANTS

(30) Priorität: 26.10.1998 CZ 861098 U
(43) Veröffentlichungstag der Anmeldung: 22.08.2001
(73) Patentinhaber: Figrema Spol. S.R.O., 783 36 Krelov (CZ)
(72) Erfinder: MICHL, Vladimir, 772 00 Olomouc (CZ); GREZL, Antonin, 772 00 Olomouc (CZ)
(74) Vertreter: Jeck, Anton, Dipl.-Ing.
(86) Internationale Anmeldenummer: IB9901673
(87) Internationale Veröffentlichungsnummer: WO00024292

(56) Entgegenhaltungen:
- EP-B- 0 161 958
- EP-B- 0 362 148
- CH-A- 345 256
- US-A- 5 605 238

## Beschreibung

### Bereich der Technik

Die Erfindung betrifft die Konstruktion einer Kupplung, insbesondere für ein Baukasten-Ständersystem zur Bildung von Ständern unterschiedlicher Formgestaltung.

### Bisheriger Stand der Technik

Für die Zusammensetzung einzelner Bauelemente von Ständern oder Regalen werden verschiedenartige Kupplungsstücke bzw. Kupplungsbaugruppen verwendet, deren Konstruktion sowohl von der Größe und Masse der auf den Ständern ausgestellten Produkte als auch von der Art der Aufstellung bzw. Aufhängung der zusammengesetzten Konstruktionen abhängt. Außer den marktüblichen geraden, Eck-, Stern-, oder Kreuzverbindungen, bei denen ein Rohr auf einen Dorn aufgesteckt wird oder Dornkupplungsstücke eingeschoben werden, sind auch verschiedene Bajonettkupplungen bekannt oder solche, die mittels verschiedener mechanischer Arretierungselemente bzw. Arretierungsdoppelelemente zusammengefügt werden. Einen Nachteil der meisten dieser Lösungen bilden die beschränkten Einsatzmöglichkeiten nur für bestimmte Artenvon Druck-, Zug-, Biege- oder Drehungsbeanspruchung, da deren vollkommene Funktionssicherheit und Zuverlässigkeit für eine beliebige Kombination der einzelnen Beanspruchungsarten nicht gegeben ist.

Bekannt sind ebenfalls Kupplungskonstruktionen, die je nach verwendetem Material, z.B. einem Kunststoff, die Vorspannung und Elastizität der verschiedenen Elemente der zusammengefügten Teile nutzen, welche, nachdem sie miteinander gekuppelt worden sind, ein kompaktes und dabei zerlegbares Ganzes bilden, wobei der Arbeitsaufwand für die Montage und Demontage von der Kompliziertheit der Bindung der einzelnen Arretierungsbauteile abhängt. Für die Verwendung bei Baumodul-Ständersystemen, insbesondere für Kleinwaren, an die in Anbetracht der ausgestelllten Produkte hohe Anforderungen gestellt werden, und zwar sowohl hinsichtlich des Designs als auch hinsichtlich der Variabilität der Zusammenfügung zu verschiedenartig geformten Säulen oder anderen Gebilden, zum Anhängen an Wänden, Stäben oder anderen Haltern, ist keine Kupplung bekannt, die eine einwandfreie Verbindung für sämtliche Beanspruchungsarten herzustellen imstande wäre und dabei eine unkomplizierte Montage und Demontage ermöglich-te.

Eine Kupplung nach dem Oberbegriff des Anspruchs 1 ist z.B. aus der EP-B-0 161 958 bekannt. Dort dient die Kupplung zum Verbinden von Panelteilen.

### Gegenstand der Erfindung

Die aufgezählten Nachteile beseitigt eine Kupplung mit Merkmalen gemäß Anspruch 1.

Weitere zweckmäßige und vorteilhafte Maßnahmen der Erfindung gehen aus den Unteransprüchen hervor.

Es ist ebenfalls von Vorteil, wenn die Schelle die Form eines U-förmigen Bügels aufweist, die Dornaußenform der Innenform entspricht, der Dorn mit einem Entlastungshohlraum und die Endstützfläche des Dorns mit in Dornlängsrichtung verlaufendenden Längsausnehmungen versehen sind.

Die Neukonstruktion der Kupplung ist so gelöst, dass diese insbesondere bei der Auswahl eines günstigen elastischen Materials für die gesamte Kupplung oder zumindest für die Schelle eine einwandfreie Arretierung und Verbindungsfestigkeit der zusammenzufügenden Bestandteile in allen Richtungen und für die verschiedensten Belastungsarten gewährt, was deren universelle Verwendung sowohl für säulenartige Baumodul-Ständersysteme als auch für anhängbare, an verschiedenen Basisflächen oder Halterungsstellen befestigbare Ausstellungsständer möglich macht. Die unkomplizierte Montage und Demontage ohne Verwendung zusätzlicher mechanischer Arretierungselemente sorgt dabei für einen operativen Gebrauch und das Zusammenfügen der einzelnen Bauteile zu den verschiedensten, variablen Gebilden.

Ausführungsbeispiele der Erfindung sind auf den beigefügten Zeichnungen veranschaulicht. Es zeigen
- Fig. 1: eine Kupplung für zwei Teile vor dem eigentlichen Zusammenfügen,
- Fig. 2: das Kuppeln dreier Teile mit Hilfe von zwei Kupplungen,
- Fig. 3 und 4: alternative Ausführungen der Teile mit zwei Schellen,
- Fig. 5 und 6: eine alternative Ausführung der Teile mit zwei Dornen dargestellt,
- Fig. 7 bis 10: schematische Schnitte durch Teile mit unterschiedlichen Schellenaußenformen,
- Fig. 11: einen Querschnitt durch die Kupplung nach Zusammenfügen der Teile und
- Fig. 12: ein alternatives Verwendungsbeispiel einer Verbindungsstelle für die Ständersäule und den Anbaufuß des Ständers dar.

### Ausführungsbeispiele der Erfindung

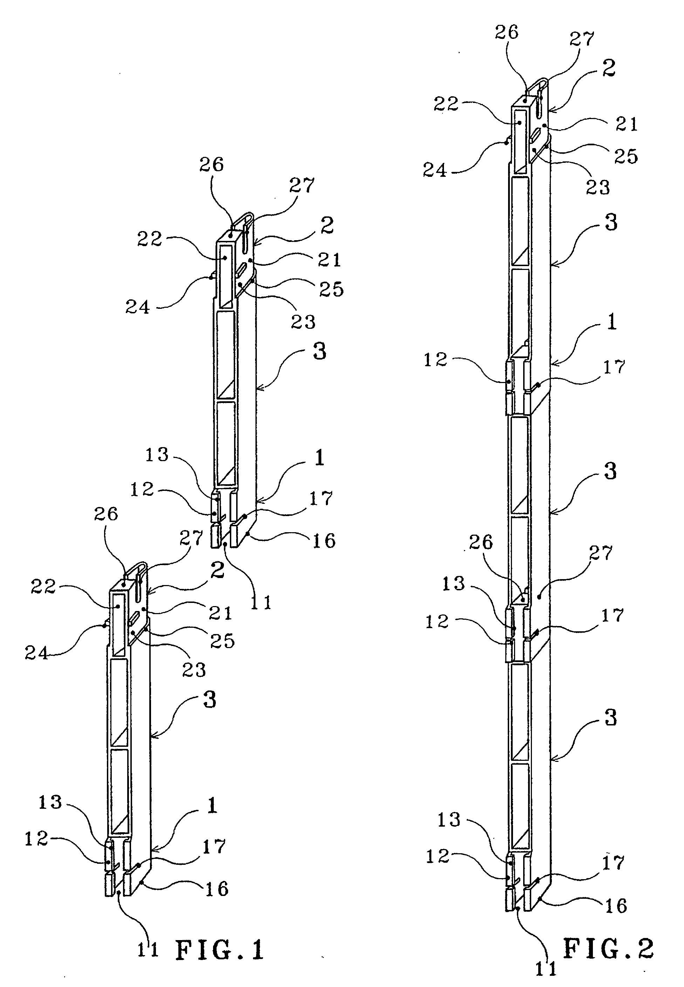

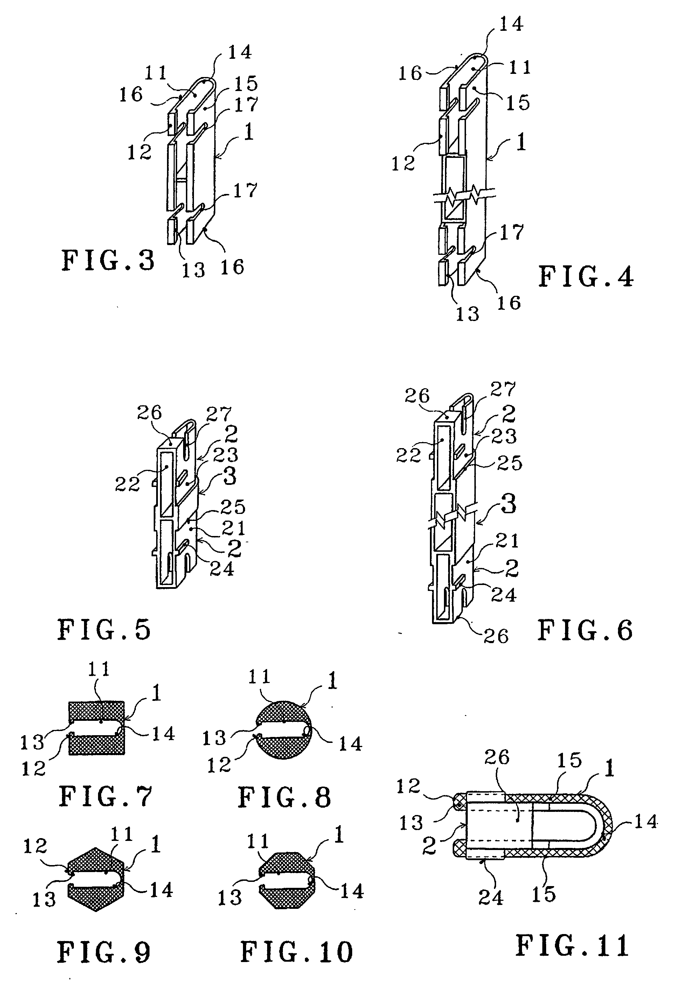

Die Kupplung besteht aus einer Schelle 1 und einem Dorn 2, die Bestandteile zweier verschiedener Verbindungsteile 3 sind. Die Schelle 1 ist in Form eines U-förmigen Bügels gebildet, der einen Innenhohlraum 11 bildet. Die seitlichen Enden der Bügelschenkel 15 weisen Klauen 12, 13 auf, denen gegenüber eine abgerundete Auflagefläche 14 ausgebildet ist. Im mittleren Teil der Schelle 1 ist in deren beiden Schenkeln 15 jeweils ein in der zu den Flächen 12 der Klauen senkrechter und zu der Auflagefläche 16 parallelverlaufender Aufnahmeschlitz 17 gebildet. Dabei kann die Außenform der Schelle 1 entweder die Form des Innenholraums 11 kopieren, wie in den Figuren 1, 3 und 4 veranschaulicht ist, oder sie kann die Form eines Vierecks, eines Kreises, eines Sechsecks oder eines beliebigen Vielecks aufweisen, wie in den Figuren 7 bis 10 zu sehen ist.

Der Dorn 2 ist als Kern 21 gebildet, dessen Außenform der des Innenhohlraums 11 der Schelle 1 entspricht. Der Kern 21 kann sowohl voll sein, oder er kann einen Entlastungshohlraum 22 von beliebiger geometrischer Form und beliebigen Abmessungen enthalten, wie in den Figuren 1, 2, 5 und 6 gezeigt ist. Die Seitenwände 23 des Kerns 21 sind mit Rippen 24 versehen, deren Form der dem Aufnahmeschlitz 17 der Schelle 1 entspricht und deren Abstand von der Stützfläche 25 des Kerns 21 dem Abstand des Aufnahmeschlitzes 17 von der Auflagefläche 16 der Schelle 1 entspricht. Die Endstützfläche 26 des Kerns 21 ist ihrerseits mit längsgestreckten Ausnehmungen 27 versehen, die in Dornlängsrichtung verlaufen und das Aufstecken von weiteren, nicht gezeigten Konstruktionselementen ermöglicht.

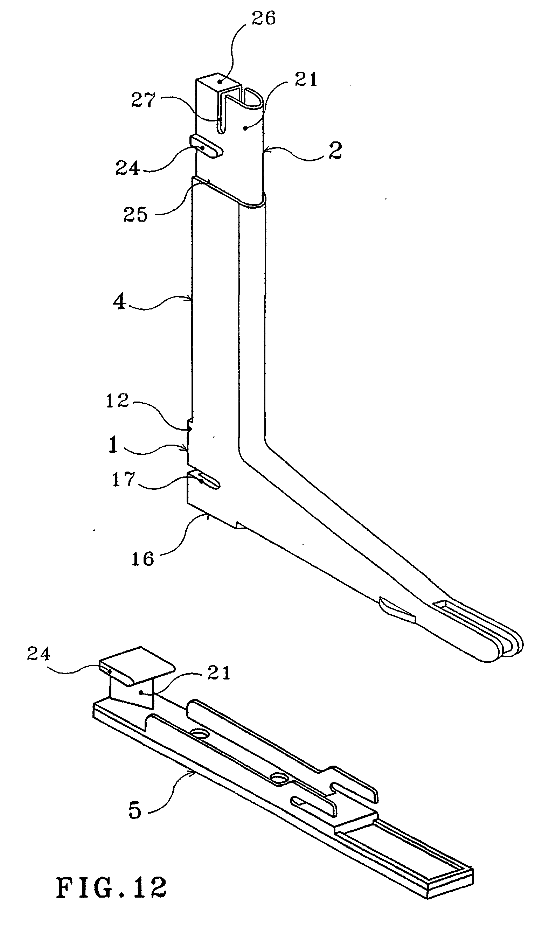

Wie aus den beigefügten Zeichnungen ersichtlich ist, kann die Kupplung sowohl für die grundlegenden Verbindungsteile 3 hergestellt werden, die an einem Ende die Schelle 1 und am anderen Ende den Dorn 2 aufweisen, oder für Verbindungsteile 3, die entweder zwei gegenüberliegende Schellen gemäß den Figuren 3 und 4 oder zwei entgegenstehende Dorne 2 gemäß den Figuren 5 und 6 aufweisen. Es ist ebenfalls möglich, in die Schelle 1 ein Konstruktionsbauteil einzuschieben, das mit Gegenelementen versehen ist, die in die Aufnahmeschlitze 17 eingeschoben werden können und die danach hinter die Klauen 13 der Endfläche 12 einschnappen, wie Fig. 12 im Fall einer Ständersäule 4 und eines Ankerstücks 5 des Baumodul-Baukastensystems zeigt.

Bei der Montage der Kupplung wird der Dorn 2 in die Schelle 1 seitlich so eingeschoben, dass die Rippen 24 des Kerns 21 in die Aufnahmeschlitze 17 der Schellenschenkel 15 so lange eingeschoben werden, bis der Kern 21 auf die Auflagefläche 14 des Innenhohlraums 11 aufsitzt und die Klauen 12, 13 hinter die hintere Kante des Kerns 21 einschnappen. Die gegenseitige vertikale Stellung der Schelle 1 und des Dorns 2 ist dann durch das Aufsitzen der Auflagefläche 16 der Schelle 1 auf die Stützfläche 25 des Kerns 21 gegeben. Somit ist die Kupplung zusammengefügt und für sämtliche Beanspruchungsarten restlos funktionstüchtig. Die Demontage der Kupplung geschieht analog nach Öffnen der Schellenklauen 12, 13, indem der Dorn 2 lediglich herausgezogen wird.

Die gezeigte Ausführung stellt nicht die einzig mögliche Konstruktion der Kupplung gemäß der Erfindung dar. Für verschiedene Baumodulsysteme können an einem Teil 3 in einer horizontalen Ebene sternförmig zwei, drei und mehr Schellen 1 angeordnet sein, in die die entsprechende Anzahl der gegenüberliegenden Dorne 2 eingeschoben wird, je nach geforderter räumlicher Gestaltung des Systems.

### Industriuelle Anwendbarkeit

Die Kupplung gemäß der Erfindung kann für das Zusammenfügen beliebiger Bauteile von Baumodulsystemen verwendet werden, bei denen eine hohe Zuverlässigkeit der Verbindung in allen Richtungen verlangt wird, sowie für alle Beanspruchungsarten, und zwar unter Beibehaltung der Möglichkeit einer raschen und unkomplizierten Demontage, wie dies z. B. bei Ständersystemen im Bereich des Handels, des Ausstellungswesens, der Reklamedarbietung usw. der Fall ist.

## Patentansprüche

1. Kupplung mit einer Schelle (1) und einem Dorn (2) für Verbindungsteile (3), insbesondere zum Aufbau eines Baukasten-Ständersystems, wobei
die Schelle (1) U-förmig mit einer seitlichen Öffnung ausgebildet und an den U-Schenkelenden mit nach innen weisenden Klauen (12, 13) versehen ist,
**dadurch gekennzeichnet,**
**dass** beide U-Schenkel (15) jeweils einen in U-Schenkellängsrichtung verlaufenden Aufnahmeschlitz (17) bzw. eine Aufnahmenut aufweisen und dass der Dorn (2) außen mit seitlichen, quer zur Dornlängsrichtung verlaufenden Rippen (24) versehen ist, die in die Aufnahmeschlitze (17) bzw. -nuten aufnehmbar sind.

2. Kupplung nach Anspruch 1,
**dadurch gekennzeichnet,**
**dass** der Dorn (29) mit einer Stützfläche (25) versehen ist, an der sich eine parallel zum Schlitz (17) bzw. zur Nut verlaufende Endfläche (16) der Schelle (1) abstützt.

3. Kupplung nach Anspruch 1 oder 2,
**dadurch gekennzeichnet,**
**dass** die Außenform des Dorns (2) der Innenform der Schelle (1) entspricht.

4. Kupplung nach einem der Ansprüche 1 bis 3,
**dadurch gekennzeichnet,**
**dass** der Dorn (2) hohl (22) ausgebildet ist.

5. Kupplung nach einem der Ansprüche 1 bis 4,
**dadurch gekennzeichnet,**
**dass** das Ende des Dorns (2) mit längsgestreckten, in Dornlängsrichtung verlaufenden Ausnehmungen (27) versehen ist.

## Claims

1. Coupling, having a clamp (1) and a mandrel (2) for connection pieces (3), more especially for the construction of a unit assembly support system, the clamp (1) being U-shaped with a lateral opening and being provided with inwardly extending claws (12, 13) at the ends of the U-shaped portions, **characterised in that** both U-shaped portions (15) each have a receiver slot (17), which extends in the longitudinal direction of the U-shaped portions, or respectively a receiver groove, and **in that** the mandrel (2) is provided externally with lateral ribs (24), which extend transversely relative to the longitudinal direction of the mandrel and are accommodatable in the receiver slots (17) or receiver grooves respectively.

2. Coupling according to claim 1, **characterised in that** the mandrel (2) is provided with a supporting face (25), on which is supported an end face (16) of the clamp (1) extending parallel to the slot (17) or respectively the groove.

3. Coupling according to claim 1 or 2, **characterised in that** the external configuration of the mandrel (2) corresponds to the internal configuration of the clamp (1).

4. Coupling according to one of claims 1 to 3, **characterised in that** the mandrel (2) is hollow (22).

5. Coupling according to one of claims 1 to 4, **characterised in that** the end of the mandrel (2) is provided with elongate recesses (27) extending in the longitudinal direction of the mandrel.

## Revendications

1. Dispositif de couplage comprenant une bride de fixation (1) et une goupille (2) pour des éléments à assembler (3), en particulier pour le montage d'un système à montants modulaires, dans lequel la bride de fixation (1) est conçue en forme de U avec une ouverture latérale et est munie, sur les extrémités des branches du U, de mâchoires (12, 13) dirigées vers l'intérieur, **caractérisé en ce que** les deux branches du U (15) comportent chacune une fente de réception (17) ou rainure de réception qui s'étend dans le sens longitudinal des branches du U, et **en ce que** la goupille (2) est munie à l'extérieur de nervures (24) latérales, qui s'étendent transversalement au sens longitudinal de la goupille et lesquelles peuvent se loger dans la fente de réception (17) ou rainure de réception.

2. Dispositif de couplage selon la revendication 1, **caractérisé en ce que** la goupille (29) est munie d'une surface d'appui (25), contre laquelle vient en appui une surface d'extrémité (16) de la bride de fixation (1), laquelle s'étend parallèlement à la fente (17) ou rainure.

3. Dispositif de couplage selon la revendication 1 ou 2, **caractérisé en ce que** la forme extérieure de la goupille (2) correspond à la forme intérieure de la bride de fixation (1).

4. Dispositif de couplage selon une des revendications 1 à 3, **caractérisé en ce que** la goupille (2) est creuse.

5. Dispositif de couplage selon une des revendications 1 à 4, **caractérisé en ce que** l'extrémité de la goupille (2) est munie d'évidements (27) allongés, qui s'étendent dans le sens longitudinal de la goupille.
